# EUROPEAN PATENT SPECIFICATION

(11) **EP 0 509 671 B1**
(45) Date of publication and mention of the grant of the patent: **14.12.1994**
(21) Application number: 92302817.9
(22) Date of filing: 31.03.1992
(51) Int. Cl.: G11B 7/24

(54) **An optical information recording medium**
Optisches Informationsaufzeichnungsmedium
Milieu d'enregistrement d'information optique

(30) Priority: 02.04.1991 JP 69962/91
(43) Date of publication of application: 21.10.1992
(73) Proprietor: Kuraray Co., Ltd., Kurashiki-shi Okayama-ken (JP)
(72) Inventor: Yoshikawa,Tadao,c/o Kuraray Co.Ltd., Kurashiki-shi, Okayama-ken (JP); Okamoto,Kyoko,c/o Kuraray Co.Ltd., Kurashiki-shi, Okayama-ken (JP); Ikari,Tokuo,c/o Kuraray Co.Ltd., Kurashiki-shi, Okayama-ken (JP)
(74) Representative: Howden, Christopher Andrew

(56) References cited:
- EP-A- 0 024 136
- EP-A- 0 049 821
- EP-A- 0 385 341
- EP-A- 0 467 705
- US-A- 4 849 304
- WORLD PATENTS INDEX LATEST Week 9209, Derwent Publications Ltd., London, GB; AN92-068234 (09) & JP-A-4 011 337
- PATENT ABSTRACTS OF JAPAN vol. 15, no. 451 (P-1276)15 November 1991 & JP-A-3 189 940
- PATENT ABSTRACTS OF JAPAN vol. 10, no. 55 (M-458)(2112) 5 March 1986 & JP-A-60 203 489

## Description

### FIELD OF THE INVENTION

This invention relates to an optical information recording medium enabling writing and/or reading of information by laser beam.

### BACKGROUND OF THE INVENTION

Optical information recording media, such as optical disks, optical cards and mass storage disk memory for computers are developed and produced on a commercial basis in recent years. Polycarbonate resin and acryl resin are proposed as materials of substrates for these optical information recording media for their superiority on optical characteristics and molding characteristics. However, they are not necessary to be satisfied.

For the reason, the hardness of said polycarbonate and acryl resin is not full, so that they are soon scratched. Also they are easy to be charged by static electricity which is hard to be discharged, so that dust soon adhere on their surfaces. In case of getting scratches or adhering dust on the surface of the optical information recording disk on which laser beams incidence, failure on recording, replaying and erasing may occur and those make the optical information recording medium's reliability go down.

For improvement of such defects, it is conventionally used to apply thermohardening resin or ultra violet hardening resin on the surface of the optical information recording medium and hardening them on the surface to form relatively hard organic overcoat for preventing the occurrence of scratching.

Also, it is proposed to include metal, semi-conductor, antistatic agent and surface active agent in the thermohardening resin coat or ultra violet hardening resin coat for the purpose of preventing dust, that is, this aim is to add antistatic ability to them.

However, to comprise thermohardenig resin coat or ultra violet hardening resin coat on the surface of the optical information recording medium increases its hardness, but, in this case, the antistatic ability does not raise.

Also, in the case of comprising a coat including metal, semi-conductor, surface active agent or antistatic agent, the antistatic ability is improved, but the hardness is not improved.

To solve above-mentioned problems it can be considered to include these metal, semi-conductor, surface active agent or antistatic resin into the coats of thermohardening resin and ultra violet resin. However, both of the hardness and the antistatic ability are not improved so much by this technical idea. To put it concretely, in the case of considering improvement of hardness, the antistatic ability goes down, because the content of ultra violet hardening resin and so on increase. Contrary to this, in the case of considering improvement of the antistatic ability full hardness can not be gained, because the content of the surface active agent and so on increase. Also in these both cases the problems such as a decline of the hardening speed, a decline of the light transmittance, a surface pollution and a decline of the coat adhesion of the thermohardening resin and the ultra violet hardening resin occurs. Therefore, the idea is not preferable.

### SUMMARY OF THE INVENTION

The object of this invention is to offer the optical information recording medium that has the following specialties, that is, resistance to scratching, resistance to friction static electricity, rapid discharging, resistance to dust adhesion on surface, so that has high reliability.

According to the invention there is provided an optical information recording medium comprising one or more substrates and one or more recording layers, wherein an ultra violet hardening coat is located on at least one side of the medium, said ultra violet hardening coat comprising multifunctional (meth) acrylate having three or more (meth) acryloyl groups in the molecule and mono-functional or di-functional (meth) acrylate or N-vinyllactam, and wherein an antistatic coat having a thickness of 0.01 to 1 µm is located on the outermost surface of the ultra violet hardening coat.

It is preferable for the hardening coat provided on the surface layer of the optical information recording medium in this invention that its tensile strength is not less than 100kg/cm² (at 20°C), and/or its elongation percentage is not more than 20% (at 20°C), and/or its elastic modulus is not less than 1x10⁹ dyne/cm (at 25°C, frequency 3.5 Hz), since the hardening coat cannot be cracked easily even in case that the substrate is deformed a little by heat or moisture. Also it is preferable for the hardening coat that its surface hardness (pencil hardness) is not less than HB, more not less than H, and almost never be scratched in steel-wool test, because it can be in its richness of resistance to scratching. More, it is preferable that its water vapor transmission ratio is not more than 400g/m² · 4hr. (at thickness of coat 100 µm, temperature 60°C, relative humidity 90%), since the getting worse of quality of the recording coat by moisture or impurities from circumstances can be prevented.

For example, the following are guessed as multifunctional (metha) acrylate having three or more acryloyl groups in a molecular, that is, multi-alcoholpoly (metha) acrylate such as trimetylolpropanetri (metha) acrylate, pentaerythlytoltri (metha) acrylate, pentaerythlytoltetra (metha) acrylate, pentaglyceroltri (metha) acrylate, glycelinetri (metha) acrylate, dipentaerythlytoltri (metha) acrylate, pentaerythlytoltetra (metha) acrylate, dipentaerythlytolpenta (metha) acrylate, dipentaerythlytolhexa (metha) acrylate, and urethaneacrylate which is composed with (metha) acrylmonomer having not less than three moles of hydroxyl groups in a molecular of polyisocyanete. Using by mixing two or more kinds of these multifunctional monomers is also possible.

For example the following are guessed as mono- functional or di-functional (metha) acrylate, that is, 2-hydroxyethyl (metha) acrylate, 2-ethylhexyl (metha) acrylate, dicyclopentanyll (metha) acrylate, phenoxyhydroxypropyl (metha) acrylate, tetrahydrofurfuryl (metha) acrylate.

Also, the following are guessed as N-vinyllactam, that is, N-vinyl-2-caprolactam, N-vinyl-3-methyl-2-pyrrolidone, N-vinyl-3-methyl-2-piperidone, N-vinyl-3-methyl-2-caprolactam, N-vinyl-4-methyl-2-pyrrolidone, N-vinyl-4-methyl-2-piperidone, N-vinyl-4-methyl-2-caprolactam, N-vinyl-5-methyl-2-pyrrolidone, N-vinyl-5-methyl-2-piperidone, N-vinyl-3-methyl-2-pyrrolidone, N-vinyl-4,5-dimethyl-2-pyrrolidone, N-vinyl-5,5-dimethyl-2-pyrrolidone, N-vinyl-3, 5,5-trimethyl-2-pyrrolidone, N-vinyl-5-methyl-5-ethyl-2-pyrrolidone, N-vinyl-3,4, 5-trimethyl-3-ethyl-2-pyrrolidone, N-vinyl-6-methyl-2-piperidone, N-vinyl-6-ethyl-2-piperidone, N-vinyl-3,5-dimethyl-2-piperidone, N-vinyl-4,4-dimethyl-2-piperidone, N-vinyl-7-methyl-2-caprolactam, N-vinyl-7-ethyl-7-ethyl-2-caprolactam, N-vinyl- 3,5-dimethyl-2-caprolactam, N-vinyl-4,6-dimethyl-2-caprolactam, N-vinyl-3,5,7-trimethyl-2-caprolactam. Using by mixing two or more kinds of mono- functional or di-functional (metha) acrylate and N-vinyllactam is also possible .

For the photo polymerization initiator, it is enough the compound which produces radical, It is possible to use the initiators of intramolecular bridge cleavage type and/or intermolecular hydrogen drawing type. They are, for example, chloro acetophenone, diethoxyacetophenone, 1-phenyl-2-hydroxy-2-methylpropane-1-one, 1-hydroxycyclohexylphenylketone, 2-methyl-1-(4-methylthiophenyl)-2-morphoryno-propane-1-one, benzylmethylketal, benzophenone, thioxenethone.

It is preferable that the mole ratio of multifunctional (metha) acrylate or N-vinyllactam is between 1 to 2 and 2 to 1. Also it is preferable that the coat thickness of the ultra violet hardening resin coat which is comprised by those is 1 to 30 µm, more preferable 3 to 15 µm. The ultra violet hardening resin coat of such configuration is superior on anti-scratch ability and anti-abrasion, also excellent in adhesion and it is hard to peel and cracking the coat.

It is possible to adopt means such as rotating coating, brush coating, dipping coating, spray coating, flow coating and the other suitable means to form such ultra violet hardening coat. The rotating coating is preferable from the view points of workability, coating homogeneity, coating smoothness.

It is preferable for the antistatic coat provided on the surface of said hardening coat of the optical information recording medium in this invention that its surface electrical resistance value is not more than 5x10¹³Ω/□, further not more than 1x10¹³Ω/□, and/or the half-value period of charged static electricity is not more than 20 seconds, further not more than 5 seconds.

It is possible to consider the means of direct coating of a system of cation, a system of anion, a system of non-ion or a system of ampho-ion for forming the antistatic coat, or the means of including transparent conductive ceramics such as SnO₂, InO, ZnO or TiO₂ or surface active agents into acryl resin, urethane resin or melamine resin and hardening them, or the means of an antistatic coat of a system of silica having siloxane combination. Among them, the antistatic coat of a system of silica having siloxane combination is preferable from the view points of antistatic characteristics, hardness, adhesion to the ultra violet hardening coat, workability, productivity and so on.

Especially, it is preferable that the antistatic coat of a system of silica having siloxane combination has many hydroxyl groups per unit area in the outer most surface which touches air. Also it is preferable the coat having no structural defect in it and forming well-regulated siloxane combination.

The coat thickness of said antistatic coat is 0.01 to 1 µm, preferably 0.05 to 0.5 µm. It is possible to adopt means such as rotating coating, brush coating, dipping coating, spray coating, flow coating and the other suitable means to form such antistatic coat. The rotating coating is preferable from the view points of workability, coating homogeneity, coating smoothness.

In the optical information recording medium in this invention, it is preferable that the hardening coat and the antistatic coat are laminated in this order from the side of the substrate and the antistatic coat is located in the outer most surface, because this way offers an optical information recording medium having high durability that prevents invasion of water and impurities including the materials comprising the antistatic coat in to the recording layer through the substrate, and prevents any changes in quality of the recording layer. More, it is preferable to comprise lamination of the hardening coat and the antistatic coat, because laminating the antistatic coat on the hardening coat can give the antistatic coat high hardness.

Further, in the optical information recording medium having lamination of the hardening coat and the antistatic coat in this order from the substrate and the antistatic coat locates in the outer most surface, it is specially preferable that the tensile strength of hardening coat is not less than 200 kg/cm² (at 20 °C), and/or the elongation percentage is not more than 10% (at 20 °C), and/or the elastic modulus is not less than 5x10⁹ dyne/cm (at 25 °C, 3.5 Hz in frequency) and the water vapor transmission ratio is not more than 250g/m² · 24hr. (at thickness of coat 100 µm, temperature 60°C, relative humidity 90% ), since such hardening coat can not be cracked easily even in the case that the substrate is deformed a little by heat or moisture, and getting worse of the recording coat by water or impurities from circumstances is prevented.

It is also preferable for such recording medium comprising by lamination of such hardening coat and the antistatic coat that its surface hardness ( pencil hardness ) is not less than HB, and/or the degree of cloudiness is not more than 20% after the abrasion test, and/or almost never be scratched in steel-wool test, and the surface electricity resistance value is not more than 5x10¹³Ω/□, and/or the half-value period of the charged static electricity is not more than 20 seconds.

### DESCRIPTION OF THE FIGURES

FIG.1 illustrates an outline of the cross sectional view of the optical information recording medium of the first implement of this invention.

FIG.2 illustrates an outline of the cross sectional view of the optical information recording medium of the second implement of this invention.

FIG.3 illustrates an outline of the cross sectional view of the optical information recording medium of the third implement of this invention.

FIG.4 illustrates an outline of the cross sectional view of the optical information recording medium of the fourth implement of this invention. Explanation on signs
1 the substrate
2 the recording coat
3 the hardening coat
4 the antistatic coat
5 the adhesive layer

### DESCRIPTION OF THE EMBODIMENT

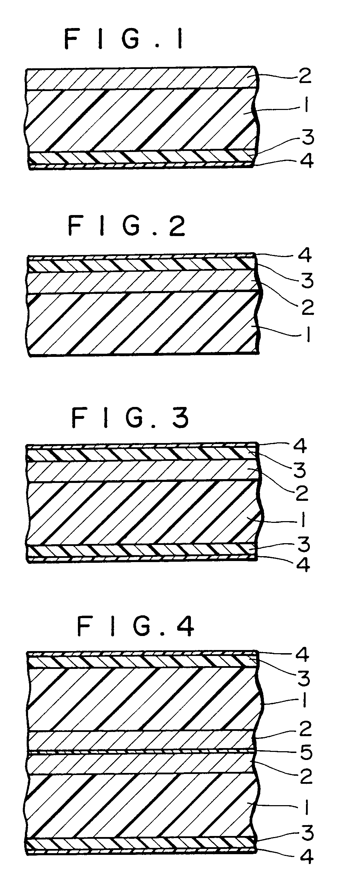

A cross section of the optical information recording medium of this invention is shown as an embodiment in FIG. 1 to FIG.4. In the optical information recording medium shown in FIG. 1, the recording layer 2 is formed on a side of the substrate 1, and the hardening coat 3 and the antistatic coat 4 are laminated in order on another side of the substrate 1. In the optical information recording medium shown in FIG.2, the recording layer 2, the hardening coat 3 and the antistatic coat 4 are laminated in order on a side of the substrate 1. In the optical information recording medium shown in FIG.3, the recording layer 2, the hardening coat 3 and the antistatic coat 4 are laminated in order on a side of the substrate 1, and the hardening coat 3 and the antistatic coat 4 are laminated in order on another side of the substrate 1. In the optical information recording medium shown in FIG.4, two structures, which are formed as that the recording layer 2 is formed on a side of the substrate 1 and the hardening coat 3 and the antistatic coat 4 are laminated in order on another side of the substrate 1, are pasted on each recording layer 2 with the adhesive layer 5. Where, it is possible to adopt a monolayer of recording coat, recording coat/protection coat, protection coat/recording coat/protection coat, or protection coat/recording coat/ protection coat/reflection coat for the structure of the recording layer 2. It is possible to adopt magneto-optical recording materials, materials which are removed by heating such as chalcogen materials etc. as the materials for comprising a recording coat. It can be used a dielectric and organic materials etc. as the materials for a protection coat. It can be used aluminum or aluminum alloy etc. as the materials for comprising a reflection coat.

### [Implement]

### [Implement-1]

A recording layer is comprised on a polycarbonate substrate, the following coating A for a ultra violet hardening resin coat is applied with rotating coating on the opposite surface of the substrate, and a hardening coat of thickness 10 µm is comprised by irradiation of a high pressure mercury lamp.

More, in this hardening coat, the tensile strength is 300 kg/cm² ( at 20 °C ), the elongation percentage is 5% ( at 20 °C ), the elastic modulus is 3.5x10¹⁰ dyne/cm ( at 25 °C, frequency 3.5 Hz ) and the water vapor transmission ratio is 106g/m² · 24hr.( at thickness of coat 100 µm, temperature 60°C, relative humidity 90% ).

### [The coating A for a ultra violet hardening resin coat]

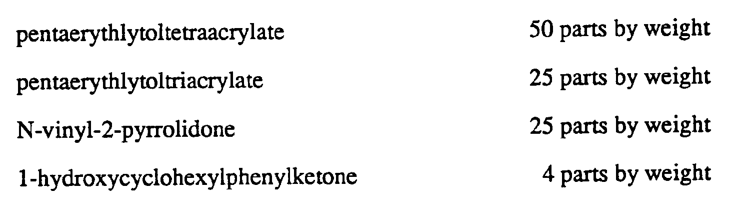

Then after, the following coating B for an antistatic coat is applied with rotating coating on the hardening coat and hardened, so that an antistatic coat of thickness 0.1 µm is comprised and the optical information recording medium of this invention is gotten.

### [The coating B for an antistatic coat]

- ethyl acetate: 45 parts by weight
- ethyl alcohol: 50 parts by weight
- silicon tetrachloride: 5 parts by weight

### [Implement-2]

By the same way in implement-1, using a polymethylmethacrylate (PMMA) substrate instead of the PC substrate the optical information recording medium of this invention is gotten.

### [Implement-3]

Using the following coating A for the ultra violet hardening resin coat instead of the coating A in the implement-1, a hardening coat is similarly comprised. Then, using the same coating B in the implement-1 an antistatic coat is similarly comprised on the hardening coat, and the optical information recording medium of this invention is gotten.

More, in this hardening coat, the tensile strength is 390 kg/cm² ( at 20 °C ), the elongation percentage is 5% ( at 20 °C ), the elastic modulus is 9.0x10⁹ dyne/cm ( at 25 °C, frequency 3.5 Hz ) and the water vapor transmission ratio is 134g/m² · 24hr.( at thickness of coat 100 µm, temperature 60°C, relative humidity 90% ).

### [The coating A for a ultra violet hardening resin coat]

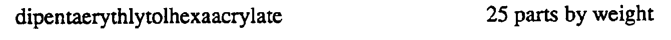

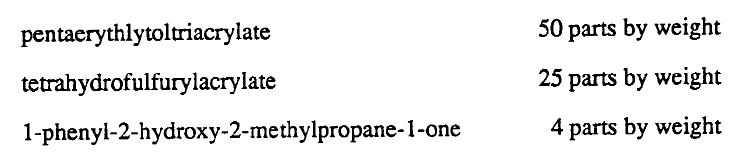

### [Implement-4]

Using the same coating A in the implement-1 the hardening coat is comprised. Then, using the antistatic agent Colcoat N-103X (produced by Colcoat Corp.) belonging to a system of siloxane as the coating B for an antistatic coat is similarly comprised on the hardening coat, and the optical information recording medium of this invention is gotten.

### [Implement-5]

Using the following coating A for the ultra violet hardening resin coat instead of the coating A in the implement-2, a hardening coat is similarly comprised. Then, using the same coating B in the implement-2 an antistatic coat is similarly comprised on the hardening coat, and the optical information recording medium of this invention is gotten.

More, in this hardening coat, the tensile strength is 240 kg/cm² ( at 20 °C ), the elongation percentage is 10% ( at 20 °C ), the elastic modulus is 5.5x10⁹ dyne/cm ( at 25 °C, frequency 3.5 Hz ) and the water vapor transmission ratio is 240g/m² · 24hr.( at thickness of coat 100 µm, temperature 60°C, relative humidity 90% ).

### [The coating A for ultra violet hardening resin coat]

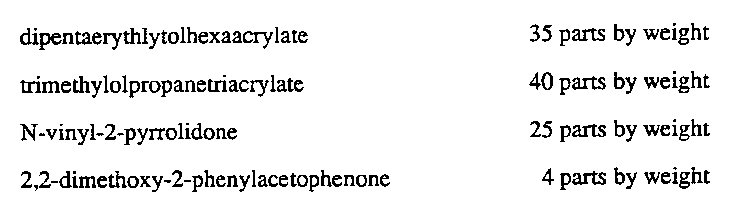

### [Implement-6]

Using the same coating A in the implement-3 the hardening coat is comprised. Then, using the antistatic agent Colcoat R (produced by Colcoat Corp.) belonging to a system of siloxane as the coating B an antistatic coat is similarly comprised on the hardening coat except for heating it at 50°C for one hour after coating, and the optical information recording medium of this invention is gotten.

### [Comparison-1]

The optical information recording medium is gotten by the same way in the implement-1 except for not comprising an antistatic coat and comprising only hardening coat on the PC substrate.

### [Comparison-2]

The optical information recording medium is gotten by the same way in the implement-1 except for not comprising a ultra violet hardening resin coat and comprising only antistatic coat on the PC substrate.

### [Comparison-3]

The optical information recording medium is gotten by the same way in the implement-1 except for coating and hardening the coating A for a ultra violet hardening resin coat which is added two weight pats of an antistatic agent comprised a surface active agent (sodium dodecyl benzene sulfonic acid) on the PC substrate instead of comprising an antistatic coat. In this comparison, an antistatic coat and a ultra violet hardening resin coat are not separately comprised as independent coats.

### [Comparison-4]

The optical information recording medium is gotten by the same way in the implement-2 except for not comprising an antistatic coat and comprising only hardening coat on the PC substrate.

### [Comparison-5]

The optical information recording medium is gotten by the same way in the implement-2 except for not comprising a ultra violet hardening resin coat and comprising only antistatic coat on the PC substrate.

### [Comparison-6]

The optical information recording medium is gotten by the same way in the implement-2 except for coating and hardening the coating A for a ultra violet hardening resin coat which is added two weight pats of an antistatic agent comprised a surface active agent (dihydroxyethylstearylamine) instead of comprising an antistatic coat. In this comparison, an antistatic coat and a ultra violet hardening resin coat are not separately comprised as independent coats.

### [Comparison-7]

The optical information recording medium is gotten by rotating coating a mixed liquid with 50 parts by weight of the same coating A in implement-1 and 50 parts by weight of the same coating B in implement-1 on a polycarbonate (PC) substrate, heating it for 30 minutes at 30 °C after coating and comprising a coat of 10 µm thickness by irradiation of high pressure mercury lamp.

### [Characteristics]

The optical information recording media which are gotten in the above ways are investigated the characteristics on hardness, anti-abrasion ability, anti-scratch ability, coat adhesion ability, antistatic ability ( half-value period and surface electricity resistance) and anti-temperature/anti-moisture ability. The results are as follows.

### [hardness test]

Pencil scratching test in accordance with JIS K 5400-1979.

### [abrasion test]

The abrasion test with the testing machine regulated in JIS K 7204-1977. Loading 240 g to a abrasion wheel and measuring a value of change of reflection rate (R₀ - R₁)/R₀ after 50 rotations, wherein shown by percentage. R₀ and R₁ are respectively reflection rates before and after the test. The light source is a heliumneon laser.

### [scratching test]

The scratching test mounting #0000 steel-wool on a 30 mm square metal and its 5 to-and-fro motions on the coated surface under the condition of loading 900 g. The moving speed of the metal material is 10 mm/sec. In the following table, a symbol ○ means that never scratched, a symbol Δ means that a littte scratched and a symbol × means that heavy scratched.

### [adhesion test]

The test to investigate the adhesive force of the painted coat to the substrate. Cross cutting the testing material reaching to the substrate by a cutter knife, wherein each interval of cutting is 1 mm and 11 lines in each direction and forming 100 cutting squares, then a cellophane tape is stuck on it. After peeling off the tape, square pieces are counted. In the following table, symbol ○ means that never peeled, symbol Δ means that 1 to 50 pieces are peeled and × means that 51 to 100 pieces are peeled.

### [half-value period measurement]

Measuring the half-value period of generation voltage by the static honest meter produced by Shisido company. The measuring circumstances is 20 °C in temperature, 50 % in humidity, 8 kV in charging voltage and 30 seconds in charging time.

### [surface electricity resistance]

Measuring the surface electricity resistance (Ω/□) with the super isolation resistance/micro ammeter TR-8601 and the measuring sample box TR-42 produced by Advantest Company. The measuring circumstances is 20 °C in temperature, 50% in humidity, 100V in charging voltage and 1 minute in charging time.

### [high-temperature/high-moisture test]

After leaving a testing piece in the circumstances of 80 °C in temperature, 85% in humidity and for 1000 hours, the aspects of the painted coat and recording coat are observed. The symbol ○ means no changes, the symbol Δ means that a little cloudiness, discoloration, irregularity and exudation are recognized, the symbol × means that cloudiness and discoloration are heavy and irregularity and exudation are recognized.

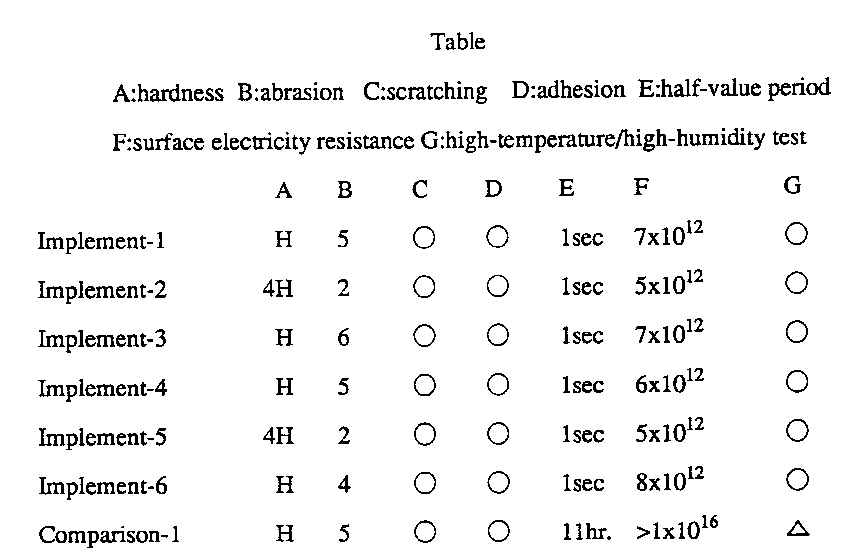

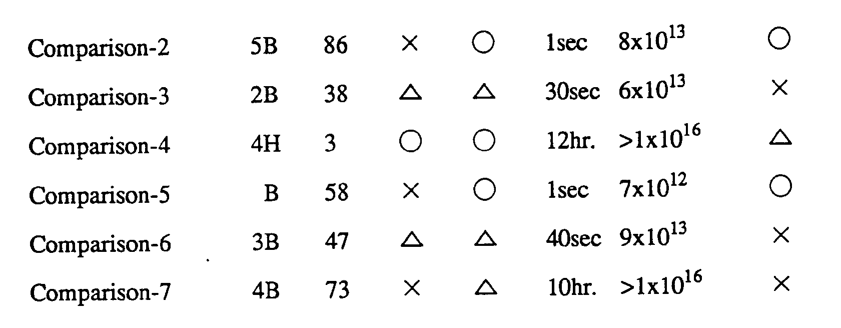

According to this result, it is clear that the optical information recording medium of this invention is hard, so that superior in mechanical characteristics such as anti-scratching ability and anti-abrasion ability, and superior in antistatic ability, so that dust is hard to adhere, and preservation ability is also excellent, so that it is superior in reliability of recording, replaying, erasing of information signals.

Contrary to this, comparison-1 and comparison-4 are guessed that they are inferior in reliability of recording, replaying, erasing of information signals, because the half-value periods of charged static electricity are long, the surface electric resistances are large, the antistatic abilities are bad, dust can be easily adhered and the the preservation abilities in high-temperature/high-humidity circumstances are bad.

More, comparison-2 and comparison-3 are guessed that they are inferior in reliability of recording, replaying, erasing of information signals, because they can be easily scratched.

Further, comparison-3 and comparison-6 are guessed that they are inferior in reliability of recording, replaying, erasing of information signals, because they can be scratched easily, the surface electricity resistances are large, so that dust can be easily adhered and the preservation abilities in high-temperature/high-humidity circumstances are very bad.

Further more, comparison-7 is guessed that it is inferior in reliability of recording, replaying, erasing of information signals, because both of the hardness and the antistatic ability are very inferior.

## Claims

1. An optical information recording medium comprising one or more substrates and one or more recording layers, wherein an ultra violet hardening coat is located on at least one side of the medium, said ultra violet hardening coat comprising multifunctional (meth) acrylate having three or more (meth) acryloyl groups in the molecule and mono-functional or di-functional (meth) acrylate or N-vinyllactam, and wherein an antistatic coat having a thickness of from 0.01 to 1 µm is located on the outermost surface of the ultra violet hardening coat.

2. An optical information recording medium as set forth in claim 1, wherein the mole ratio of multifunctional (meth) acrylate having three or more (meth) acryloyl groups in the molecule to mono-functional or di-functional (meth) acrylate or N-vinyllactam lies from 1:2 to 2:1.

3. An optical information recording medium as set forth in claim 1, wherein the thickness of the ultra violet hardening coat is 1 to 30 µm.

4. An optical information recording medium as set forth in claim 1, characterized in that the surface hardness (pencil hardness) is not less than HB, and/or the degree of cloudiness after an abrasion test is not more than 20%, and/or full anti-scratch on steel-wool test, and the surface electrical resistance value is not more than 5x10¹³Ω/□, and/or the half-value period of charged static electricity is not more than 20 seconds.

## Patentansprüche

1. Ein optisches Informationsaufzeichnungsmedium, das ein oder mehrere Substrate und ein oder mehrere Aufzeichnungsschichten umfaßt, wobei ein durch ultraviolette Bestrahlung aushärtender Überzug auf wenigstens einer Seite des Mediums angeordnet ist, wobei besagter durch ultraviolette Strahlung aushärtender Überzug multifunktionelles (Meth)acrylat mit drei oder mehr (Meth)acryloylgruppen im Molekül und monofunktionelles oder difunktionelles (Meth)acrylat oder N-Vinyllactam umfaßt, und wobei ein antistatischer Überzug mit einer Dicke von 0,01 bis 1 µm auf der äußersten Oberfläche des durch ultraviolette Strahlung aushärtenden Überzugs angeordnet ist.

2. Ein optisches Informationsaufzeichnungsmedium nach Anspruch 1, wobei das Molverhältnis von multifunktionellem (Meth)acrylat mit drei oder mehr (Meth)acryloylgruppen im Molekül zu monofunktionellem oder difunktionellem (Meth)acrylat oder N-Vinyllactam bei 1:2 bis 2:1 liegt.

3. Ein optisches Informationsaufzeichnungssystem nach Anspruch 1, wobei die Dicke des durch ultraviolette Bestrahlung aushärtenden Überzugs 1 bis 30 µm beträgt.

4. Ein optisches Informationsaufzeichnungsmedium nach Anspruch 1, dadurch gekennzeichnet, daß die Oberflächenhärte (Bleistifthärte) nicht geringer ist als HB und/oder der Trübheitsgrad nach einem Abriebtest nicht größer ist als 20% und/oder vollständige Kratzfestigkeit beim Stahlwolletest, und der elektrische Oberflächenwiderstandswert nicht größer ist als 5x10¹³Ω/□ und/oder die Halbwertzeit der aufgeladenen statischen Elektrizität nicht mehr als 20 Sekunden beträgt.

## Revendications

1. Support optique d'enregistrement de données comprenant un ou plusieurs substrats et une ou plusieurs couches d'enregistrement, dans lequel une couche de durcissement aux ultraviolets est située sur au moins un côté du support, ladite couche de durcissement aux ultraviolets comprenant du (méth)acrylate multifonctionnel ayant trois groupes (méth)acryloyles ou plus dans la molécule et du (méth)acrylate monofonctionnel ou di-fonctionnel ou du N-lactame de vinyle, et dans lequel une couche antistatique ayant une épaisseur comprise entre 0,01 et 1 µm est placée sur la surface la plus extérieure de la couche de durcissement aux ultraviolets.

2. Support optique d'enregistrement de données selon la revendication 1, dans lequel le rapport molaire du (méth)acrylate multifonctionnel ayant trois groupes (méth)acryloyles ou plus dans la molécule et du (méth)acrylate monofonctionnel ou di-fonctionnel ou du N-lactame de vinyle se trouve compris entre 1:2 et 2:1.

3. Support optique d'enregistrement de données selon la revendication 1, dans lequel l'épaisseur de la couche de durcissement aux ultraviolets est comprise entre 1 et 30 µm.

4. Support optique d'enregistrement de données selon la revendication 1, caractérisé en ce que la dureté de surface (dureté du crayon) est au moins égale à HB, et/ou le degré de turbidité après un essai d'usure est au plus de 20 %, et/ou présente une propriété anti-rayure à l'essai de paille de fer, et la valeur de la résistance électrique superficielle est au plus de 5 x 10¹³ Ω/[], et/ou la demi-valeur de la période d'électricité statique chargée est au plus de 20 secondes.
